# EUROPÄISCHE PATENTSCHRIFT

(11) **EP 3 461 786 B1**
(45) Veröffentlichungstag und Bekanntmachung des Hinweises auf die Patenterteilung: **27.09.2023**
(21) Anmeldenummer: 18189899.0
(22) Anmeldetag: 21.08.2018
(51) Int. Cl.: B66F 9/24, H01M 10/44, B60L 3/12, B60L 50/60, B60L 53/30, B60L 53/66, B60L 58/12, B60L 53/67, H01M 10/48

(54) **VERFAHREN ZUR ERFASSUNG VON FAHRZEUGDATEN ÜBER EINE BETRIEBSDAUER EINES FLURFÖRDERZEUGS ZUR AUSLEGUNG DER KAPAZITÄT EINER BATTERIEVORRICHTUNG DES FLURFÖRDERZEUGS**
METHOD FOR DETECTING VEHICLE DATA OVER AN OPERATING TIME OF AN INDUSTRIAL TRUCK TO DIMENSION THE CAPACITY OF A BATTERY OF THE INDUSTRIAL TRUCK
PROCÉDÉ DE DÉTECTION DES DONNÉES DE VÉHICULE PENDANT UNE DURÉE DE FONCTIONNEMENT D'UN CHARIOT DE MANUTENTION POUR DIMENSIONER LA CAPACITY D'UNE BATTERIE DU CHARIOT DE MANUTENTION

(30) Priorität: 29.09.2017 DE 102017122697
(43) Veröffentlichungstag der Anmeldung: 03.04.2019
(73) Patentinhaber: STILL GmbH, 22113 Hamburg (DE)
(72) Erfinder: HAAKE, Dr., Kai, 21073 Hamburg (DE)
(74) Vertreter: Patentship Patentanwaltgesellschaft

(56) Entgegenhaltungen:
- DE-A1-102006 051 586
- US-A1- 2004 100 225
- US-A1- 2006 076 427

## Beschreibung

Die Erfindung betrifft ein Verfahren zur Erfassung von Fahrzeugdaten über eine Betriebsdauer eines Flurförderzeugs zur Auslegung der Kapazität einer Batterievorrichtung des Flurförderzeugs in einem vorbestimmten Einsatzgebiet des Flurförderzeugs. Ferner betrifft die vorliegende Erfindung ein Flurförderzeug zur Erfassung von Fahrzeugdaten über eine Betriebsdauer des Flurförderzeugs in einem vorbestimmten Einsatzgebiet zur Durchführung des erfindungsgemäßen Verfahrens.

Die DE 10 2006 051 586 A1 offenbart, bei einem Flurförderzeug die Kapazität der Traktionsbatterie nicht mehr auf die volle Schichtdauer auszulegen, sondern die Kapazität der Traktionsbateterie kleiner zu wählen und die Traktionsbatterie in Pausenzeiten/Nutzungspausen zwischenzuladen, damit die Traktionsbatterie für eine volle Schicht reicht.

Aus dem Stand der Technik ist es bekannt, Fahrzeuge, insbesondere batterie-elektrisch betriebene Flurförderzeuge, mit entsprechender Messtechnik, wie zum Beispiel Datenlogger-Geräte, auszurüsten, um deren Fahrzeugdaten während ihres Betriebs in einem vorbestimmten Einsatzgebiet, zum Beispiel in einem Warenlager, systematisch aufzunehmen. Mit den aufgenommenen Fahrzeugdaten ist man in der Lage, die verbrauchte elektrische Leistung des betreffenden Fahrzeugs und den jeweiligen Ort, an welchem diese elektrische Leistung verbraucht wurde, über die Zeit aufzunehmen.

Ferner können mit den erfassten Fahrzeugdaten die Leistungsbedarfe verschiedener und einzelner technischer Komponenten des zu untersuchenden Flurförderzeugs, wie zum Beispiel der Fahrantrieb oder die Hydraulik-Pumpe dezidiert aufgeschlüsselt werden. Diese Daten können dann für eine sogenannte Optimums-Berechnung von Positionen von Ladestationen, deren Leistungen sowie die Bemessung einer Batteriegröße des entsprechenden Fahrzeugs herangezogen werden. Diese Aspekte sind insbesondere bei Verwaltung einer Flotte von Fahrzeugen über ein Flottenmanagementsystem von großer Bedeutung.

Ein Problem bei einer derartigen Datenerfassung wie oben beschrieben besteht jedoch darin, dass die zu untersuchenden bzw. zu beobachtenden Fahrzeuge zum Teil mit einer entsprechenden Messtechnik zur Erfassung der erforderlichen Leistungsdaten ausgerüstet sind. Doch die Messtechnik zur Erfassung von Positionsdaten der eingesetzten Fahrzeuge während eines Betriebszeitraumes und innerhalb eines definierten Einsatzgebietes ist in der Regel nicht serienmäßig in diesen Fahrzeugen vorhanden. Deshalb muss oftmals eine entsprechende Datenaufnahme nachträglich und mit großem Aufwand durchgeführt werden.

Für die Positionsermittlung von eingesetzten Fahrzeugen während eines Betriebszeitraumes und innerhalb eines definierten Einsatzgebietes ist deshalb die Installation einer bestimmten und mit hohen Kosten beaufschlagten Infrastruktur erforderlich. Auch scheitert die Positionsermittlung von Fahrzeugen mit der entsprechenden Technik während des Betriebszeitraumes oftmals an arbeitsrechtlichen Hindernissen.

Für die detaillierte Leistungsermittlung der technischen Komponenten des Fahrzeugs sind spezielle Messgeräte wie zum Beispiel Druck-, Strom-, Spannungs-Sensoren und ein Datenlogger erforderlich.

Der technische und zeitliche bzw. organisatorische Aufwand an Vorbereitung und Durchführung, um die oben beschriebenen Fahrzeugdaten von einem oder mehreren Fahrzeugen einer Flotte systematisch zu erfassen, führt deshalb zu unverhältnismäßig hohen Kosten, so dass das Energieverhalten eines oder mehrerer Fahrzeuge lediglich stichprobenartig durchführbar ist, was letztlich die Genauigkeit und die Qualität einer Analyse des Energieverhaltens der zu untersuchenden Fahrzeuge herabsetzt.

Diese sollten jedoch von einer hohen Güte sein, wenn einem Kunden eine individuelle Beratungsleistung zur Optimierung seines Fahrzeugbestandes bzw. Flottensystems angeboten werden soll.

Der vorliegenden Erfindung liegt deshalb die Aufgabe zugrunde, ein Konzept zur effizienten Erfassung von Daten, insbesondere Fahrzeugdaten zur Auslegung einer Kapazität bzw. Batteriegröße einer Batterievorrichtung eines Flurförderzeugs, über eine Betriebsdauer dieses Flurförderzeugs in einem Einsatzgebiet bereitzustellen.

Eine weitere Aufgabe der vorliegenden Erfindung besteht darin, auf einfache und flexible Weise kundenspezifische und optimale Lösungen bei der Planung von Flottenmanagement-Systemen und den dazugehörigen Infrastrukturen in Bezug auf Ladestationen und den erforderlichen Batteriegrößen für ein oder mehrere Flurförderzeuge zu erstellen.

Diese Aufgabe wird erfindungsgemäß durch ein Verfahren zur Erfassung von Fahrzeugdaten über eine Betriebsdauer eines Flurförderzeugs zur Auslegung der Kapazität einer Batterievorrichtung des Flurförderzeugs in einem vorbestimmten Einsatzgebiet des Flurförderzeugs mit einer Datenerfassungsvorrichtung gelöst, welche mit einer Steuerungsvorrichtung des Flurförderzeugs verbindbar ist, umfassend die folgenden Schritte:
- Ermitteln eines ersten Fahrzeugparameters und eines zweiten Fahrzeugparameters über die Betriebsdauer des Flurförderzeugs durch die Datenerfassungsvorrichtung, wobei der erste Fahrzeugparameter mindestens einen Kennwert für einen Leistungsverbrauch des Flurförderzeugs umfasst, um daraus einen aktuellen Ladezustand der Batterievorrichtung des Flurförderzeugs zu ermitteln, und wobei der zweite Fahrzeugparameter mindestens einen Kennwert für eine Nutzung oder eine Nichtnutzung des Flurförderzeugs während der Betriebsdauer des Flurförderzeugs umfasst, wobei der Kennwert angibt, ob sich das Flurförderzeug innerhalb des Einsatzgebietes bewegt oder ob sich das Flurförderzeug auf einer Parkposition befindet;
- Ermitteln der Kapazität der Batterievorrichtung des Flurförderzeugs auf Basis des aufgenommenen ersten Fahrzeugparameters und des zweiten Fahrzeugparameters durch eine Auswertungsvorrichtung, wobei zunächst in Abhängigkeit einer ermittelten Nichtnutzungsdauer des Flurförderzeugs eine definierte Anzahl von möglichen Aufenthaltsorten des Flurförderzeugs innerhalb des Einsatzgebietes ermittelt wird, wobei die möglichen Aufenthaltsorte heuristisch und/oder stochastisch synthetisiert werden und wobei anschließend in Abhängigkeit der ermittelten Anzahl von möglichen Aufenthaltsorten des Flurförderzeugs und dem ermittelten Leistungsverbrauch des Flurförderzeugs jeweils eine Zeitdauer ermittelt wird, in welcher die Batterievorrichtung an den möglichen Aufenthaltsorten zwischengeladen werden kann, wobei die Kapazität der Batterievorrichtung derart ausgelegt wird, dass durch das Zwischenladen an den möglichen Aufenthaltsorten des Flurförderzeugs kein Wechsel der Batterievorrichtung während der Betriebsdauer des Flurförderzeugs erforderlich ist.

Die Aufgabe wird außerdem durch ein Flurförderzeug gelöst, umfassend eine Batterievorrichtung und einer Datenerfassungsvorrichtung, wobei die Datenerfassungsvorrichtung ausgebildet ist, ein Verfahren zur Erfassung von Fahrzeugdaten über eine Betriebsdauer des Flurförderzeugs in einem vorbestimmten Einsatzgebiet nach einem der vorangegangenen Verfahrensansprüche auszuführen.

Durch das erfindungsgemäße Verfahren wird der Vorteil erzielt, dass auf kostengünstige und effiziente Weise Daten von einem oder mehreren Fahrzeugen, insbesondere batterie-elektrisch betriebenen Flurförderzeugen, erfasst und verarbeitet werden können, so dass auf dieser Grundlage eine optimale Kundenlösung im Hinblick auf eine erforderliche Batteriegröße bzw. Batteriekapazität eines Fahrzeugs und die dafür notwendige Ladetechnik gefunden werden kann. Unter Ladetechnik ist dabei auch das Aufstellen von Ladestationen und sowie die Bemessung von optimaler Anzahl und Größe dieser Ladestationen innerhalb eines definierten Einsatzgebietes des Fahrzeuges oder der Fahrzeuge zu verstehen. Die zu erstellende Kundenlösung wird dadurch auf die technischen und / oder administrativen Anforderungen und Gegebenheiten beim Kunden zugeschnitten.

Insbesondere ist dies von Vorteil bei der Planung und der Optimierung von Flottenmanagement-Systemen und den dazugehörigen Infrastrukturen in Bezug auf Ladestationen und den erforderlichen Batteriegrößen für ein oder mehrere Flurförderzeuge. Diese Notwendigkeit besteht, da zukünftig die Verwendung von lediglich einer Lithium-Ionen-Batterie für den Betrieb eines batterie-elektrisch betriebenen Flurförderzeugs das Zwischenladen derart optimiert werden soll, dass ein Batteriewechsel ausgeschlossen werden kann bzw. soll.

Ein weiterer Vorteil des erfindungsgemäßen Verfahrens besteht darin, dass die Datenerfassung und die Datenverarbeitung vollautomatisch erfolgen können. So können zum Beispiel über ein sogenanntes Leih-System die zu analysierenden Flurförderzeuge mit einer sogenannten Fleetmanager-Funktion für die Erfassung, Weiterleitung, beispielsweise über Datenfernabfrage, und Verarbeitung der Fahrzeugdaten kostengünstig über eine bestimmte Zeitdauer ausgerüstet werden. Diese Zeitdauer hat jedoch nur sehr geringen Einfluss auf die Gesamtkosten der Analyse der erfassten Daten und spiegelt sich nur in den Kosten der Datenfernübertragung über die Zeitdauer wider, welche als untergeordnet zu den sonstigen üblichen Aufwendungen der Analyse, wie zum Beispiel Kundengespräche und Installation des Fleetmanager-Funktion zu betrachten ist.

Ein weiterer Vorteil des erfindungsgemäßen Verfahrens besteht darin, dass mittels spezieller Datenmesstechnik, als Ersatz für die Fleetmanager-Hardware-Komponente, auch entsprechende Analysen kostengünstig und effizient an Fremdfahrzeugen durchgeführt werden können. Ferner kann die Analyse der erfassten Daten auf Flotten, die aus einer Vielzahl von Fahrzeugen bestehen, auf einfache Weise und ohne großen technischen Aufwand, ausgeweitet werden.

Gemäß einer Ausführungsform der vorliegenden Erfindung ist der mindestens eine Kennwert des ersten Fahrzeugparameters für einen Leistungsverbrauch des Flurförderzeugs als eine Summe der aus der Batterievorrichtung entnommenen Energie abbildbar ist. Dadurch wird der Vorteil erzielt, dass auf effiziente Weise alle Energiebedarfe derjenigen technischen Komponenten des zu analysierenden Flurförderzeugs, welche von der Batterievorrichtung gespeist werden, bekannt und damit auch auf einfache Weise und schnell analysierbar sind.

Gemäß einer Ausführungsform der vorliegenden Erfindung wird der mindestens eine Kennwert des zweiten Fahrzeugparameters für eine Nutzung oder eine Nichtnutzung des Flurförderzeugs über die Betriebsdauer des Flurförderzeugs aus einer Verkettung von einzelnen Werten gebildet, umfassend einen ersten Wert für eine Durchschnittsgeschwindigkeit und / oder einen zweiten Wert für einen Sitzkontakt und / oder einen dritten Wert für Einschaltung/Abschaltung des Flurförderzeugs. Dadurch wird der Vorteil erreicht, dass ein sogenannter Bereitschaftsgrad des zu analysierenden Flurförderzeugs sehr genau und realitätsnah, das heißt, einem realistischen Einsatzszenario entsprechend, abbildbar ist.

Gemäß einer Ausführungsform der vorliegenden Erfindung umfasst die Verkettung der einzelnen Werte aus dem ersten Wert und / oder dem zweiten Wert und / oder dem dritten Wert
eine Summierung oder eine logische Verknüpfung dieser einzelnen Werte. Dadurch wird der Vorteil erreicht, dass eine sehr genaue Aussage über ein Nutzung oder eine Nichtnutzung des Flurförderzeugs gemacht werden kann.

Gemäß einer Ausführungsform der vorliegenden Erfindung sind der erste Wert, der zweite Wert und der dritte Wert nach jeweils vordefinierten und flurförderzeugabhängigen Einflussfaktoren gewichtet. Dadurch wird der Vorteil erreicht, dass eine kundenindividuelle Situation effizient und mit einem hohen Genauigkeitsgrad abgebildet werden kann, so dass die zu analysierenden Daten ein sehr reales Kunden- bzw. Einsatzszenario des zu untersuchenden Fahrzeugs abbilden.

Gemäß einer Ausführungsform der vorliegenden Erfindung verhält sich die Anzahl von möglichen Aufenthaltsorten des Flurförderzeugs in dem vorbestimmten Einsatzgebiet zu der ermittelten Nichtnutzungsdauer des Flurförderzeugs in dem vorbestimmten Einsatzgebiet umgekehrt proportional. Dadurch wird der Vorteil erreicht, dass auf effiziente und sehr genaue Weise eine Position eines zu untersuchenden Flurförderzeugs in dem vorbestimmten Einsatzgebiet ermittelt werden kann. Beispielhaft lässt sich deshalb auch sagen, dass mit der Dauer einer Pause auch die Anzahl von möglichen Aufenthaltspositionen des zu untersuchenden Flurförderzeugs in dem vorbestimmten Einsatzgebiet sinkt.

Gemäß einer Ausführungsform der vorliegenden Erfindung ist die Wahrscheinlichkeit für einen möglichen Aufenthaltsort oder einer möglichen Position des Flurförderzeugs in dem vorbestimmten Einsatzgebiet während der Betriebsdauer des Flurförderzeugs von dem Kennwert der Nichtnutzung des Flurförderzeugs abhängig. Dadurch wird der Vorteil erzielt, dass die Position des zu untersuchenden Flurförderzeugs in dem vorbestimmten Einsatzgebiet sehr genau bestimmt werden kann, was zu einer Erhöhung der Qualität der Analyse der erfassten Daten des Flurförderzeugs führt.

Gemäß einer Ausführungsform der vorliegenden Erfindung umfasst diese ein Flurförderzeug, umfassend eine Batterievorrichtung und einer Datenerfassungsvorrichtung, wobei die Datenerfassungsvorrichtung ausgebildet ist, ein Verfahren zur Erfassung von Fahrzeugdaten über eine Betriebsdauer des Flurförderzeugs in einem vorbestimmten Einsatzgebiet nach auszuführen. Mit dem erfindungsgemäßen Flurförderzeug lassen sich ebenso die bereits durch das erfindungsgemäße Verfahren beschriebenen Vorteile erreichen.

Weitere Vorteile und Einzelheiten der Erfindung werden anhand des in den schematischen Figuren dargestellten Ausführungsbeispiels näher erläutert. Hierbei zeigt
- Figur 1: ein Diagramm eines Verfahrens zur Erfassung von Fahrzeugdaten über eine Betriebsdauer,
- Figur 2: eine schematische Abbildung des erfindungsgemäßen Flurförderzeugs gemäß einer Ausführungsform der vorliegenden Erfindung und
- Figur 3: ein beispielhaftes Diagramm zur Darstellung eines örtlichen Bestimmtheitsgrades in Abhängigkeit der Zeitdauer für eine Pausenlänge.

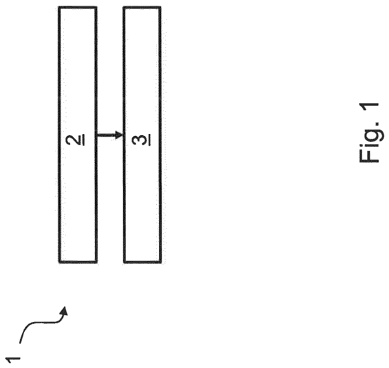

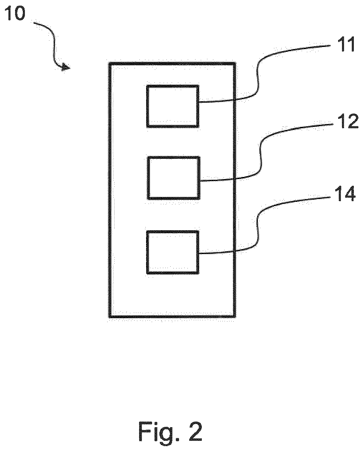

Figur 1 zeigt ein Diagramm eines erfindungsgemäßen Verfahrens 1 zur Erfassung von Fahrzeugdaten über eine Betriebsdauer eines batterie-elektrisch betriebenen Flurförderzeugs 10 gemäß der Figur 2 zur Auslegung der Kapazität einer Batterievorrichtung 11 des Flurförderzeugs 10 in einem vorbestimmten Einsatzgebiet des Flurförderzeugs 10 mit einer Datenerfassungsvorrichtung 12.

Das Verfahren umfasst den ersten Schritt des Ermittelns 2 eines ersten Fahrzeugparameters und eines zweiten Fahrzeugparameters über die Betriebsdauer des Flurförderzeugs 10 durch die Datenerfassungsvorrichtung 12, wobei der erste Fahrzeugparameter mindestens einen Kennwert für einen Leistungsverbrauch des Flurförderzeugs 10 umfasst, um daraus einen aktuellen Ladezustand der Batterievorrichtung 11 des Flurförderzeugs 10 zu ermitteln. Der zweite Fahrzeugparameter umfasst dabei mindestens einen Kennwert für eine Nutzung oder eine Nichtnutzung des Flurförderzeugs 10 während der Betriebsdauer des Flurförderzeugs 10, wobei der Kennwert angibt, ob sich das Flurförderzeug 10 innerhalb des Einsatzgebietes bewegt oder ob sich das Flurförderzeug 10 auf einer Parkposition befindet.

Das erfindungsgemäße Verfahren umfasst ferner den zweiten Schritt des Ermittelns 3 der Kapazität der Batterievorrichtung 11 des Flurförderzeugs 10 auf Basis des aufgenommenen ersten Fahrzeugparameters und des zweiten Fahrzeugparameters durch eine Auswertungsvorrichtung 14, wobei zunächst in Abhängigkeit einer ermittelten Nichtnutzungsdauer des Flurförderzeugs 10 eine definierte Anzahl von möglichen Aufenthaltsorten des Flurförderzeugs 10 innerhalb des Einsatzgebietes ermittelt wird.

Anschließend wird in Abhängigkeit der ermittelten Anzahl von möglichen Aufenthaltsorten des Flurförderzeugs 10 und dem ermittelten Leistungsverbrauch des Flurförderzeugs 10 jeweils eine Zeitdauer ermittelt, in welcher die Batterievorrichtung 11 an den möglichen Aufenthaltsorten zwischengeladen werden kann, wobei die Kapazität der Batterievorrichtung 11 derart ausgelegt wird, dass durch das Zwischenladen an den möglichen Aufenthaltsorten des Flurförderzeugs 10 kein Wechsel der Batterievorrichtung 11 während der Betriebsdauer des Flurförderzeugs 10 erforderlich ist.

Die Batterievorrichtung 11 kann vorzugsweise mindestens eine Batterie umfassen, welche insbesondere als eine Lithium-Ionen-Batterie ausgebildet sein kann.

Das Erfassen der Fahrzeugdaten oder allgemeiner, der Daten eines zu analysierenden Flurförderzeugs 10 oder allgemeiner, eines Fahrzeugs, kann dabei über eine Datenfernabfrage in Form einer zeitlichen Abtastung erfolgen. Dabei können sowohl der Leistungs- bzw. Energiebedarf als auch die Art der Nichtnutzung des zu analysierenden Fahrzeugs aufgenommen werden.

Dabei kann der mindestens eine Kennwert des ersten Fahrzeugparameters für einen Leistungsverbrauch des Flurförderzeugs 10 als eine Summe der aus der Batterievorrichtung 11 entnommenen Energie abgebildet werden. Dadurch wird der Vorteil erzielt, dass auf effiziente Weise alle Energiebedarfe derjenigen technischen Komponenten des zu analysierenden Flurförderzeugs 10, wie zum Beispiel der Fahrantriebsmotor oder die Hydraulikpumpe, welche von der Batterievorrichtung 11 mit Energie gespeist werden, bekannt und damit auch auf einfache Weise und schnell analysierbar sind. Außerdem lässt sich auf diese Weise schneller zuordnen, welche technische Komponente des Flurförderzeugs 10 zu welchem Zeitpunkt wieviel Energie aus der Batterievorrichtung 11 entnimmt.

Aus den Leistungsverbrauchswerten bzw. den Leistungsaufnahmen über die Betriebszeit des Flurförderzeugs 10 kann über das an sich bekannte Batteriemodell (inkl. des Batteriemanagementsystems) der Ladezustand (durch Entladung) der Batterievorrichtung 11 ermittelt werden.

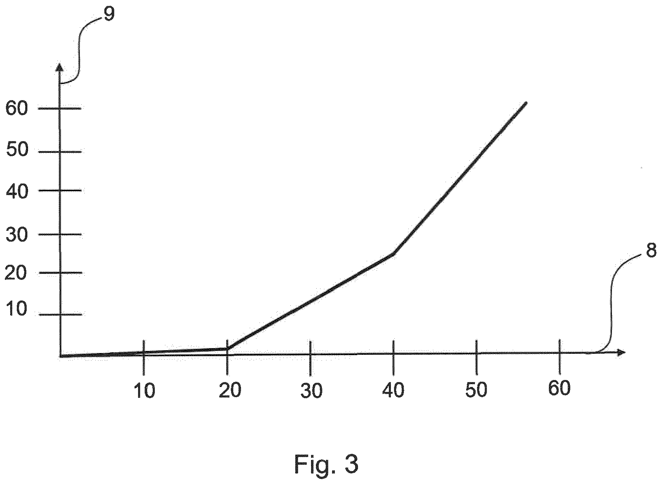

In den Prozesspausen, also zu den Zeitpunkten, an denen das Flurförderzeug 10 sich nicht bewegt und steht, kann potentiell eine Aufladung bzw. Zwischenladung der Batterievorrichtung 11 mit einer Leistung P stattfinden. Dies kann über eine an diesem Ort installierte Ladestation erfolgen. Es ist natürlich selbstverständlich, dass eine entsprechende Ladestation nur an einer Position innerhalb des vorbestimmten Einsatzgebietes des Flurförderzeugs 10 sinnvoll ist, wenn dieses Flurförderzeug 10 auch für eine ausreichende Zeitdauer dort verweilt, um die Batterievorrichtung 11 aufladen zu können. Aus den erfassten Fahrzeugdaten selbst lässt sich jedoch kein dezidierter Rückschluss auf eine aktuelle Position des zu analysierenden Flurförderzeugs 10 und damit einer örtlich gebundenen Ladeeinrichtung oder Ladestation ableiten. Deshalb muss die jeweilige Position des zu analysierenden Flurförderzeugs 10 heuristisch und/oder stochastisch synthetisiert werden. Dies erfolgt zum Beispiel auf Basis von Detail-Positions-Leistungsaufnahmen als Stichprobe. Dadurch lässt sich dann ein Zusammenhang zwischen einer Länge einer Pause des betreffenden Flurförderzeugs und der Wahrscheinlichkeit, in welchem sogenannten Planquadrat des Einsatzgebietes des Flurförderzeugs 10 sich dieses Flurförderzeug 10 aufhält, zum Beispiel in Halle 1 und Halle 4, herleiten. Man kann auch sagen: Mit der Dauer einer Pause sinkt die Anzahl der möglichen Aufenthaltspositionen des zu analysierenden Flurförderzeugs 10. Dieser Sachverhalt ist auch in der Figur 3 exemplarisch dargestellt, wie weiter unten noch ausführlich dargestellt.

Ferner kann der mindestens eine Kennwert des zweiten Fahrzeugparameters für eine Nutzung oder eine Nichtnutzung des Flurförderzeugs 10 über die Betriebsdauer des Flurförderzeugs 10 aus einer Verkettung von einzelnen Werten gebildet werden, umfassend einen ersten Wert (x1) für eine Durchschnittsgeschwindigkeit und / oder einen zweiten Wert (x2) für einen Sitzkontakt und / oder einen dritten Wert (x3) für Einschaltung/Abschaltung des Flurförderzeugs 10. Dadurch wird der Vorteil erreicht, dass ein sogenannter Bereitschaftsgrad des zu analysierenden Flurförderzeugs sehr genau und realitätsnah, das heißt, einem realistischen Einsatzszenario entsprechend, darstellbar ist.

Die Verkettung dieser einzelnen Werte aus dem ersten Wert und / oder dem zweiten Wert und / oder dem dritten kann eine Summierung oder eine logische Verknüpfung dieser einzelnen Werte umfassen. Dadurch wird der Vorteil erreicht, dass eine sehr genaue Aussage über einen Nutzungsgrad oder einen Nichtnutzungsgrad des Flurförderzeugs 10 gemacht werden kann. Zum Beispiel kann der erste Wert eine Durchschnittsgeschwindigkeit (x1), der zweite Werte ein Sitzkontakt (x2) und der dritte Wert ein Anzeichen für eine Flurförderzeug-Einschaltung (x3) über einen Zündschlüssel-Kontakt sein. Aus der Rangfolge des ersten Wertes (x1), des zweiten Wertes (x2) und des dritten Wertes (x3) lässt sich dann der Bereitschaftsgrad des Flurförderzeugs 10 im gesamten Prozess für das zu untersuchende Flurförderzeugs 10 abbilden und erfassen. Zum Beispiel kann dann zusammen mit einer ermittelten Durchschnitts-Leistung in einem definierten Zeitintervall auf eine sogenannte und jeweilige Einsatzhärte des zu analysierenden Flurförderzeugs 10 geschlossen werden, ohne dass man dazu den genauen Prozessablauf kennen muss.

Der erste Wert (x1), der zweite Wert (x2) und der dritte Wert (x3) können nach jeweils vordefinierten und flurförderzeugabhängigen Einflussfaktoren gewichtet werden. Zum Beispiel kann dem zweiten Wert (x2) aus dem vorherigen Beispiel, der einen Status für einen Sitzkontakt darstellt, eine geringere Gewichtung zugeteilt werden, wenn das betreffende Flurförderzeug 10 zum Beispiel ohne entsprechende Sitzgelegenheit ausgebildet ist. Dadurch wird der Vorteil erreicht, dass eine kundenindividuelle Situation effizient und mit einem hohen Genauigkeitsgrad abgebildet werden kann, so dass die zu analysierenden Daten ein sehr reales Kunden- bzw. Einsatzszenario des zu untersuchenden Fahrzeugs abbilden.

Die Figur 2 zeigt eine schematische Abbildung des erfindungsgemäßen Flurförderzeugs 10, umfassend eine Batterievorrichtung 11 und einer Datenerfassungsvorrichtung 12, wobei die Datenerfassungsvorrichtung 12 ausgebildet ist, ein Verfahren zur Erfassung von Fahrzeugdaten über eine Betriebsdauer des Flurförderzeugs 10 in einem vorbestimmten Einsatzgebiet mit dem Ermitteln 2 der Fahrzeugparameter auszuführen. Das Flurförderzeug 10 kann optional, wie in der Figur 2 dargestellt, auch eine entsprechende Auswertungsvorrichtung 14 umfassen, um die erfassten Daten auszuwerten, bevor diese über eine nicht dargestellte Kommunikationsverbindung zwischen dem Flurförderzeug 10 und einem Dateninformationssystem übermittelt werden. Die Auswertevorrichtung 14 kann alternativ auch getrennt von dem Flurförderzeug 10 angeordnet sein. In der Auswertevorrichtung 14 erfolgt die Ermittlung 3 der Kapazität der Batterievorrichtung 11 des Flurförderzeugs 10 des erfindungsgemäßen Verfahrens.

Die Figur 3 zeigt ein beispielhaftes Diagramm zur Darstellung eines örtlichen Bestimmtheitsgrades in Abhängigkeit der Zeitdauer für eine Pausenlänge. Die Abszisse 8 stellt dabei die Pausenlänge in Minuten dar. Die Ordinate 9 stellt den Bestimmtheitsgrad des Ortes des zu analysierenden Flurförderzeugs 10 in Prozent dar. Aus dem Diagramm der Figur 3 lässt sich also eine definierte Position entnehmen, an der das zu analysierende Flurförderzeug 10 für eine bestimmte Zeitdauer steht. An dieser Position könnte dann theoretisch ein Zwischenladen der Batterievorrichtung 11 über eine entsprechend an dieser Position positionierte Ladestation erfolgen.

Wie ferner aus der Figur 3 zu entnehmen ist, verhält sich die Anzahl von möglichen Aufenthaltsorten des Flurförderzeugs 10 in dem vorbestimmten Einsatzgebiet zu der ermittelten Nichtnutzungsdauer des Flurförderzeugs in dem vorbestimmten Einsatzgebiet umgekehrt proportional. Dadurch wird der Vorteil erreicht, dass auf effiziente und sehr genaue Weise eine Position eines zu untersuchenden Flurförderzeugs 10 in dem vorbestimmten Einsatzgebiet ermittelt werden kann. Beispielhaft lässt sich deshalb auch sagen, dass mit der Dauer einer Pause auch die Anzahl von möglichen Aufenthaltspositionen des zu untersuchenden Flurförderzeugs in dem vorbestimmten Einsatzgebiet sinkt.

Die Wahrscheinlichkeit für einen möglichen Aufenthaltsort oder einer möglichen Position des zu analysierenden Flurförderzeugs 10 in dem vorbestimmten Einsatzgebiet während der Betriebsdauer des Flurförderzeugs 10 kann dabei auch von dem Kennwert der Nichtnutzung des Flurförderzeugs 10 abhängig gemacht werden. Dadurch wird der Vorteil erzielt, dass die Position des zu untersuchenden Flurförderzeugs 10 in dem vorbestimmten Einsatzgebiet sehr genau bestimmt werden kann, was zu einer Erhöhung der Qualität der Analyse der erfassten Daten des Flurförderzeugs 10 führt. Der Kennwert für die Nichtnutzung des Flurförderzeugs 10 kann zum Beispiel aus der Figur 3 über die jeweilige Pausenlänge ermittelt werden.

Im Folgenden sind beispielhaft einige mögliche Korrelationen dargestellt:

| **Nr.** | **Stillstand** | **Indiziert durch Wert** | **Beispielhafte Situation** | **Definiertheit / Wahrscheinlichkeit des Ortes** | **Günstiger Platz für eine Ladestation** |
|---|---|---|---|---|---|
| 1 | Sehr kurz | X1 | Warten an Verkehrsknotenpunkt/Rolltor | Sehr niedrig | Nein |
| 2 | Kurz | X1 | Warten auf Ladungsübernahme | Mittel | (?) |
| 3 | Mittellang | X2 | Raucherpause | Hoch | (Ja) |
| 4 | Lang | X3 | Frühstücks-/Mittagspause | Sehr hoch | Ja |
| 5 | Sehr lang | X3 | Parken nach Schichtende | Eindeutig | Ja |

Wenn man nun annimmt, dass nur die Nummern 3 bis 5 der obigen Tabelle günstige Positionen für entsprechende Ladestationen zum Laden der Batterievorrichtung 11 sind, so ist nun zu ermitteln, wie viele unterschiedliche Orte dies innerhalb des vorbestimmten Einsatzgebietes sein können. Auf Basis von Stichproben der Detaildaten lässt sich dann darstellen, dass es sich im Mittel um N Orte handelt (mit einer Standardabweichung N_{std}). In einer weiteren Simulation werden nun sogenannte virtuelle Ladestationen an diese Positionen angeordnet und die Ladung der Batterievorrichtung 11 des zu analysierenden Flurförderzeugs 10 über die Parkdauer in der nachgespielten Prozesszeit des Flurförderzeugs 10 simuliert, während die Energieentnahme bzw. die Entladung der Batterievorrichtung 11 des Flurförderzeugs 10 aus den zeitlichen Leistungsdaten ermittelt wird. Mit weiteren Parametern, zum Beispiel der Mindestrestladung und / oder der erwarteten Lebensdauer der Batterie, können dann Minimalkombinationen aus verschiedenen Batteriegrößen und Ladeinfrastruktur errechnet werden. Anschließend lässt sich zum Beispiel mittels einer Variantenrechnung die Ergebnisstabilität bewerten.

## Patentansprüche

1. Verfahren (1) zur Erfassung von Fahrzeugdaten über eine Betriebsdauer eines Flurförderzeugs (10) zur Auslegung der Kapazität einer Batterievorrichtung (11) des Flurförderzeugs (10) in einem vorbestimmten Einsatzgebiet des Flurförderzeugs (10) mit einer Datenerfassungsvorrichtung (12), umfassend die folgenden Schritte:
- Ermitteln (2) eines ersten Fahrzeugparameters und eines zweiten Fahrzeugparameters über die Betriebsdauer des Flurförderzeugs (10) durch die Datenerfassungsvorrichtung (12), wobei der erste Fahrzeugparameter mindestens einen Kennwert für einen Leistungsverbrauch des Flurförderzeugs (10) umfasst, um daraus einen aktuellen Ladezustand der Batterievorrichtung (11) des Flurförderzeugs (10) zu ermitteln, und
wobei der zweite Fahrzeugparameter mindestens einen Kennwert für eine Nutzung oder eine Nichtnutzung des Flurförderzeugs (10) während der Betriebsdauer des Flurförderzeugs (10) umfasst, wobei der Kennwert angibt, ob sich das Flurförderzeug (10) innerhalb des Einsatzgebietes bewegt oder ob sich das Flurförderzeug (10) auf einer Parkposition befindet,
- Ermitteln (3) der Kapazität der Batterievorrichtung (11) des Flurförderzeugs (10) auf Basis des aufgenommenen ersten Fahrzeugparameters und des zweiten Fahrzeugparameters durch eine Auswertungsvorrichtung (14), wobei zunächst in Abhängigkeit einer ermittelten Nichtnutzungsdauer des Flurförderzeugs (10) eine definierte Anzahl von möglichen Aufenthaltsorten des Flurförderzeugs (10) innerhalb des Einsatzgebietes ermittelt wird, wobei die möglichen Aufenthaltsorte heuristisch und/oder stochastisch synthetisiert werden, und
wobei anschließend in Abhängigkeit der ermittelten Anzahl von möglichen Aufenthaltsorten des Flurförderzeugs (10) und dem ermittelten Leistungsverbrauch des Flurförderzeugs (10) jeweils eine Zeitdauer ermittelt wird, in welcher die Batterievorrichtung (11) an den möglichen Aufenthaltsorten zwischengeladen werden kann, wobei die Kapazität der Batterievorrichtung (11) derart ausgelegt wird, dass durch das Zwischenladen an den möglichen Aufenthaltsorten des Flurförderzeugs (10) kein Wechsel der Batterievorrichtung (11) während der Betriebsdauer des Flurförderzeugs (10) erforderlich ist.

2. Verfahren nach Anspruch 1, wobei der mindestens eine Kennwert des ersten Fahrzeugparameters für einen Leistungsverbrauch des Flurförderzeugs (10) als eine Summe der Energiebedarfe für einen Leistungsverbrauch des Flurförderzeugs (10) als eine Summe der aus der Batterievorrichtung (11) entnommenen Energie abbildbar ist.

3. Verfahren nach Anspruch 1 oder 2, wobei der mindestens eine Kennwert des zweiten Fahrzeugparameters für eine Nutzung oder eine Nichtnutzung des Flurförderzeugs (10) über die Betriebsdauer des Flurförderzeugs (10) aus einer Verkettung von einzelnen Werten gebildet wird, umfassend einen ersten Wert für eine Durchschnittsgeschwindigkeit und / oder einen zweiten Wert für einen Sitzkontakt und / oder einen dritten Wert für Einschaltung/Abschaltung des Flurförderzeugs (10).

4. Verfahren nach Anspruch 3, wobei die Verkettung der einzelnen Werte aus dem ersten Wert und / oder dem zweiten Wert und / oder dem dritten Wert eine Summierung
oder eine logische Verknüpfung dieser einzelnen Werte umfasst.

5. Verfahren nach einem der Ansprüche 3 oder 4, wobei der erste Wert, der zweite Wert und der dritte Wert nach jeweils vordefinierten und flurförderzeugabhängigen Einflussfaktoren gewichtet sind.

6. Verfahren nach einem der vorangegangenen Ansprüche, wobei sich die Anzahl von möglichen Aufenthaltsorten des Flurförderzeugs (10) in dem vorbestimmten Einsatzgebiet zu der ermittelten Nichtnutzungsdauer des Flurförderzeugs (10) in dem vorbestimmten Einsatzgebiet umgekehrt proportional verhält.

7. Verfahren nach einem der vorangegangenen Ansprüche, wobei die Wahrscheinlichkeit für einen möglichen Aufenthaltsort oder einer möglichen Position des Flurförderzeugs (10) in dem vorbestimmten Einsatzgebiet während der Betriebsdauer des Flurförderzeugs (10) von dem Kennwert der Nichtnutzung des Flurförderzeugs (10) abhängig ist.

8. Flurförderzeug (10), umfassend eine Batterievorrichtung (11) und einer Datenerfassungsvorrichtung (12), wobei die Datenerfassungsvorrichtung (12) ausgebildet ist, ein Verfahren zur Erfassung von Fahrzeugdaten über eine Betriebsdauer des Flurförderzeugs (10) in einem vorbestimmten Einsatzgebiet nach einem der vorangegangenen Verfahrensansprüche auszuführen.

## Claims

1. Method (1) for capturing truck data over an operating duration of an industrial truck (10) for dimensioning the capacity of a battery device (11) of the industrial truck (10) in a predetermined operating area of the industrial truck (10) using a data-capturing device (12), comprising the following steps:
- ascertaining (2) a first truck parameter and a second truck parameter over the operating duration of the industrial truck (10) by means of the data-capturing device (12), wherein the first truck parameter includes at least one characteristic value for a power consumption of the industrial truck (10) in order to ascertain a current state of charge of the battery device (11) of the industrial truck (10) therefrom, and
wherein the second truck parameter includes at least one characteristic value for the use or non-use of the industrial truck (10) during the operating duration of the industrial truck (10), wherein the characteristic value indicates whether the industrial truck (10) is moving within the operating area or whether the industrial truck (10) is in a parked position,
- ascertaining (3) the capacity of the battery device (11) of the industrial truck (10) on the basis of the recorded first truck parameter and the second truck parameter by means of an evaluation device (14), wherein a defined number of possible stop locations of the industrial truck (10) within the operating area is first ascertained on the basis of an ascertained non-use duration of the industrial truck (10), with the possible stop locations being synthesised heuristically and/or stochastically, and
wherein a time period in which the battery device (11) can be interim charged at the possible stop locations is then ascertained in each case on the basis of the ascertained number of possible stop locations of the industrial truck (10) and the ascertained power consumption of the industrial truck (10), wherein the capacity of the battery device (11) is dimensioned such that, by interim charging at the possible stop locations of the industrial truck (10), it is not necessary to change the battery device (11) during the operating duration of the industrial truck (10).

2. Method according to Claim 1, wherein the at least one characteristic value of the first truck parameter for power consumption of the industrial truck (10) can be mapped as a total of the energy demands for power consumption of the industrial truck (10) as a total of the energy drawn from the battery device (11).

3. Method according to Claim 1 or 2, wherein the at least one characteristic value of the second truck parameter for the use or non-use of the industrial truck (10) over the operating duration of the industrial truck (10) is formed from a chain of individual values, comprising a first value for an average speed and/or a second value for a seat contact and/or a third value for start-up/shutdown of the industrial truck (10).

4. Method according to Claim 3, wherein the chain of individual values composed of the first value and/or the second value and/or the third value comprises summation or logical linking of these individual values.

5. Method according to any of Claims 3 or 4, wherein the first value, the second value and the third value are weighted according to predefined and industrial-truck-dependent influencing factors in each case.

6. Method according to any of the preceding claims, wherein the number of possible stop locations of the industrial truck (10) in the predetermined operating area is inversely proportional to the ascertained non-use duration of the industrial truck (10) in the predetermined operating area.

7. Method according to any of the preceding claims, wherein the probability of a possible stop location or a possible position of the industrial truck (10) in the predetermined operating area during the operating duration of the industrial truck (10) is dependent on the characteristic value of the non-use of the industrial truck (10).

8. Industrial truck (10), comprising a battery device (11) and a data-capturing device (12), wherein the data-capturing device (12) is configured to carry out a method for capturing truck data over an operating duration of the industrial truck (10) in a predetermined operating area according to any of the preceding method claims.

## Revendications

1. Procédé (1) d'acquisition de données de véhicule sur une durée de fonctionnement d'un chariot de manutention (10) en vue de concevoir la capacité d'un dispositif de batterie (11) du chariot de manutention (10) dans une zone opérationnelle prédéterminée du chariot de manutention (10) avec un dispositif d'acquisition de données (12), comprenant les étapes suivantes :
- détermination (2) d'un premier paramètre de véhicule et d'un deuxième paramètre de véhicule sur la durée de fonctionnement du chariot de manutention (10) par le dispositif d'acquisition de données (12), le premier paramètre de véhicule comportant au moins une valeur caractéristique pour une puissance consommée du chariot de manutention (10), afin de déterminer à partir de là un état de charge actuel du dispositif de batterie (11) du chariot de manutention (10), et
le deuxième paramètre de véhicule comportant au moins une valeur caractéristique pour une utilisation ou une non-utilisation du chariot de manutention (10) pendant la durée de fonctionnement du chariot de manutention (10), la valeur caractéristique indiquant si le chariot de manutention (10) se déplace à l'intérieur de la zone opérationnelle ou si le chariot de manutention (10) se trouve sur une position de stationnement,
- détermination (3) de la capacité du dispositif de batterie (11) du chariot de manutention (10) sur la base du premier paramètre de véhicule enregistré et du deuxième paramètre de véhicule par un dispositif d'interprétation (14), un nombre défini de lieux de séjour possibles du chariot de manutention (10) à l'intérieur de la zone opérationnelle étant tout d'abord déterminé en fonction d'une durée d'utilisation déterminée du chariot de manutention (10), les lieux de séjour possibles étant synthétisés de manière heuristique et/ou stochastique, et
une durée pendant laquelle le dispositif de batterie (11) peut faire l'objet d'une charge intermédiaire aux lieux de séjour possibles étant ensuite déterminée respectivement en fonction du nombre déterminé de lieux de séjour possibles du chariot de manutention (10) et de la puissance consommée déterminée du chariot de manutention (10), le dispositif de batterie (11) étant conçu de telle sorte que grâce à la charge intermédiaire aux lieux de séjour possibles du chariot de manutention (10), aucun remplacement du dispositif de batterie (11) pendant la durée de fonctionnement du chariot de manutention (10).

2. Procédé selon la revendication 1, l'au moins une valeur caractéristique du premier paramètre de véhicule pour une puissance consommée du chariot de manutention (10) pouvant être représentée sous la forme d'une somme des besoins en énergie pour une puissance consommée du chariot de manutention (10) en tant qu'une somme de l'énergie soutirée du dispositif de batterie (11).

3. Procédé selon la revendication 1 ou 2, l'au moins une valeur caractéristique du deuxième paramètre de véhicule pour une utilisation ou une non-utilisation du chariot de manutention (10) pendant la durée de fonctionnement du chariot de manutention (10) étant formée à partir d'un chaînage de valeurs individuelles, comprenant une première valeur pour une vitesse moyenne et/ou une deuxième valeur pour un contact de siège et/ou une troisième valeur pour la mise en circuit/hors circuit du chariot de manutention (10).

4. Procédé selon la revendication 3, le chaînage des valeurs individuelles constitué de la première valeur et/ou de la deuxième valeur et/ou de la troisième valeur comprenant une addition ou une combinaison logique de ces valeurs individuelles.

5. Procédé selon l'une des revendications 3 ou 4, la première valeur, la deuxième valeur et la troisième valeur étant pondérées d'après des facteurs d'influence respectivement prédéfinis et dépendants du chariot de manutention.

6. Procédé selon l'une des revendications précédentes, le nombre de lieux de séjour possibles du chariot de manutention (10) dans la zone opérationnelle prédéterminée se comportant de manière inversement proportionnelle à la durée d'utilisation déterminée du chariot de manutention (10) dans la zone opérationnelle prédéterminée.

7. Procédé selon l'une des revendications précédentes, la probabilité pour un lieu de séjour possible ou une position possible du chariot de manutention (10) dans la zone opérationnelle prédéterminée pendant la durée de fonctionnement du chariot de manutention (10) dépendant de la valeur caractéristique de non-utilisation du chariot de manutention (10).

8. Chariot de manutention (10), comprenant un dispositif de batterie (11) du chariot de manutention (10) et un dispositif d'acquisition de données (12), le dispositif d'acquisition de données (12) étant configuré pour mettre en œuvre un procédé d'acquisition de données de véhicule sur une durée de fonctionnement du chariot de manutention (10) dans une zone opérationnelle prédéterminée selon l'une des revendications précédentes.
